# FASCICULE DE BREVET EUROPEEN

(11) **EP 1 352 181 B1**
(45) Date de publication et mention de la délivrance du brevet: **17.10.2007**
(21) Numéro de dépôt: 02711973.4
(22) Date de dépôt: 16.01.2002
(51) Int. Cl.: F16D 65/21, F16D 65/56

(54) **ACTIONNEUR ELECTROMECANIQUE DE FREIN A DISQUES MULTIPLES POUR MOYEN DE TRANSPORT, NOTAMMENT POUR AVION**
ELEKTROMECHANISCHE BETÄTIGUNGSEINRICHTUNG EINER MEHRSCHEIBENBREMSE FÜR TRANSPORTMITTEL, INSBESONDERE FÜR FLUGZEUGE
MULTIPLE-DISC BRAKE ELECTROMECHANICAL ACTUATOR FOR TRANSPORT MEANS, IN PARTICULAR FOR AN AEROPLANE

(30) Priorité: 18.01.2001 FR 0100669
(43) Date de publication de la demande: 15.10.2003
(73) Titulaire: SAGEM Défense Sécurité, 75015 Paris (FR)
(72) Inventeur: AUDREN, Jean-Thierry, F-78470 Saint-Rémy-les-Chevreuses (FR); BEZANERE, Daniel, F-92160 Antony (FR)
(74) Mandataire: Lemoine, Robert
(86) Numéro de dépôt international: PCT/FR2002/000161
(87) Numéro de publication internationale: WO 2002/057649

(56) Documents cités:
- WO-A-97/45653
- WO-A-98/05881
- US-A- 4 809 824

## Description

La présente invention concerne un actionneur électromécanique de frein à disques multiples pour moyen de transport, notamment pour avion, ainsi qu'un frein à disques multiples commandé par plusieurs actionneurs de ce type, illustré par exemple par le document US-A-4 809 824.

Les actionneurs électromécaniques utilisés actuellement pour serrer les freins à disques multiples des avions sont réalisés avec des dimensions importantes. Or, comme les emplacements destinés à les recevoir sont exigus, leur installation et leur dépose nécessitent l'exécution d'opérations longues, difficiles et par conséquent coûteuses.

Ces actionneurs ont en outre une course de fonctionnement limitée. Pour assurer un freinage parfaitement sûr, il est par conséquent nécessaire de remplacer les disques de frein bien avant qu'ils soient complètement usés, ce qui entraîne toutefois des frais de maintenance élevés.

La présente invention se propose plus particulièrement de remédier à ces inconvénients et, pour ce faire, elle a pour objet un actionneur électromécanique de frein à disques multiples comprenant, montés sur un bâti,
- un premier ensemble réversible comprenant une vis centrale, un premier moteur électrique destiné à entraîner la vis centrale en rotation, un premier écrou déplaçable axialement sur la vis centrale lorsque celle-ci est entraînée en rotation, et des moyens interposés entre la vis centrale et le premier écrou pour permettre un déplacement réversible de l'un au moins de ces deux organes ; et
- un second ensemble irréversible comprenant une vis annulaire solidaire extérieurement du premier écrou, un deuxième moteur électrique destiné à entraîner en rotation la vis annulaire et le premier écrou, un deuxième écrou immobilisé en rotation par rapport au bâti, mais déplaçable axialement sur la vis annulaire lorsque celle-ci est entraînée en rotation, la vis annulaire et le deuxième écrou étant en prise par l'intermédiaire de leurs filetages qui rendent leur déplacement irréversible, et un piston prévu à l'une des extrémités du deuxième écrou pour serrer les disques les uns contre les autres afin d'assurer un freinage de service du moyen de transport lors de l'actionnement du premier moteur et un freinage de parc lors de l'actionnement du second moteur.

Le premier ensemble est prévu réversible pour que la vis centrale puisse tourner lorsqu'une pression est exercée axialement sur le premier écrou.

Le second ensemble est quant à lui prévu irréversible pour que la vis annulaire ne puisse pas tourner lorsqu'une pression est exercée axialement sur le piston.

Grâce à la structure concentrique des vis et des écrous, l'actionneur selon l'invention est nettement moins encombrant que les actionneurs électromécaniques actuels. Son installation et sa dépose peuvent donc être réalisées plus facilement et plus rapidement.

De préférence, les moyens prévus pour permettre un déplacement réversible de la vis centrale et/ou du premier écrou sont constitués par un mécanisme à rouleaux ou un mécanisme à billes.

Selon un mode de réalisation préféré de l'invention, la vis centrale comporte, du côté opposé au piston, une jupe cylindrique pourvue extérieurement d'une couronne dentée engrenant avec un pignon intermédiaire engrenant lui-même avec un pignon calé sur l'arbre de sortie du premier moteur.

Quant à la vis annulaire, elle comporte, du côté opposé au piston, un prolongement cylindrique entourant au moins partiellement la jupe de la vis centrale et pourvu extérieurement d'une couronne dentée engrenant avec un pignon intermédiaire engrenant lui-même avec un pignon calé sur l'arbre de sortie du deuxième moteur.

Comme les deux couronnes dentées sont situées du même côté, à l'opposé des disques de frein, l'actionneur selon l'invention peut être réalisé avec une hauteur nettement inférieure à celle des actionneurs électromécaniques actuels, ce qui permet un gain de place pour l'installation des disques multiples. Ceux-ci peuvent donc être plus nombreux et/ou épais et assurer une plus grande longévité.

Avantageusement, la vis centrale est déplaçable axialement, à l'encontre de l'action d'organes élastiques précomprimés, dans la direction l'éloignant des disques multiples lors du freinage de parc.

Grâce à cette disposition, le freinage de parc du véhicule peut être assuré en toute sécurité, que les disques soient très chauds, à la suite d'un freinage de service, ou qu'ils soient froids.

Lorsque les disques se refroidissent, leur contraction est en effet absorbée par les organes élastiques qui ont la possibilité de se détendre. Le freinage de parc reste toutefois assuré une fois que les disques sont refroidis car les organes élastiques demeurent précomprimés par construction.

De préférence, les organes élastiques sont disposés dans un logement annulaire ménagé dans le bâti, coaxialement avec la vis centrale, et précomprimés entre l'extrémité du logement située à l'opposé des disques multiples et une collerette annulaire portée par un palier sur lequel s'appuie un bout d'arbre prolongeant axialement la vis centrale, la collerette étant appliquée contre l'autre extrémité du logement lors du freinage de service et non lors du freinage de parc.

Selon l'invention, les organes élastiques peuvent être des rondelles déformables.

Afin de rendre l'actionneur selon l'invention particulièrement compact, il est préférable que le logement annulaire du bâti s'étende au moins en partie à l'intérieur de la jupe cylindrique de la vis centrale.

Avantageusement, la vis centrale porte une paroi circulaire s'étendant perpendiculairement à son axe de rotation, cette paroi portant elle-même la jupe cylindrique à sa périphérie et étant pourvue sur sa face externe d'une protubérance contre laquelle une protubérance prévue sur le premier écrou et ayant une forme correspondante est destinée à prendre appui lors du freinage de parc.

Grâce à cette disposition, le premier écrou ne risque pas de rester coincé après avoir été vissé à fond sur la vis centrale. En effet, comme les protubérances viennent l'une contre l'autre suivant un mouvement sensiblement perpendiculaire à leur surface de contact lors du vissage à fond du premier écrou, il suffit de faire tourner la vis centrale en sens inverse pour dévisser le premier écrou sans la moindre difficulté.

De préférence, un capteur est prévu pour déterminer la position angulaire de l'arbre de sortie du premier moteur et connaître la distance que doit parcourir le piston pour exécuter un freinage de service.

Il est possible ainsi de prendre les dispositions nécessaires pour rattraper le jeu dû à l'usure des disques.

La présente invention concerne également un frein à disques multiples pour moyen de transport, notamment pour avion, dont la commande est assurée par plusieurs actionneurs du type de celui qui vient d'être décrit.

Un mode d'exécution de la présente invention sera décrit ci-après à titre d'exemple nullement limitatif en référence aux dessins annexés dans lesquels :
- la figure 1 est une vue en coupe schématique d'un actionneur de frein à disques multiples selon l'invention, le frein n'étant pas serré et comportant des disques neufs ;
- la figure 2 est une vue en coupe schématique montrant l'actionneur lors d'un freinage de service avec des disques neufs ;
- la figure 3 est une vue en coupe schématique montrant l'actionneur lors d'un freinage de service avec des disques usés ;
- la figure 4 est une vue analogue à la figure 1 mais dans laquelle le frein n'est pas serré et comporte des disques usés ;
- la figure 5 est une vue en coupe schématique montrant l'actionneur lors d'un freinage de parc, les disques étant neufs et chauds ;
- la figure 6 est une vue en coupe schématique montrant l'actionneur lors d'un freinage de parc après refroidissement des disques, ces derniers étant neufs ; et
- la figure 7 est une vue en coupe schématique montrant l'actionneur lors d'un freinage de parc, les disques étant usés et chauds.

L'actionneur électromécanique que l'on peut voir sur les dessins a été mis au point pour commander un frein d'avion, mais rien ne s'oppose à ce qu'il soit utilisé pour commander un frein de véhicule terrestre, par exemple un frein de poids-lourd.

Cet actionneur comprend un premier ensemble réversible comportant une vis centrale 1 destinée à être entraînée en rotation par un premier moteur électrique 2, un premier écrou 3 déplaçable axialement sur la vis 1 lorsque celle-ci est entraînée en rotation, et des moyens 4 interposés entre la vis 1 et l'écrou 3 afin de permettre un déplacement réversible de l'un au moins de ces deux organes.

On notera ici que les moyens 4 peuvent être constitués d'une manière connue en soi par un mécanisme à rouleaux ou un mécanisme à billes.

L'actionneur comprend également un second ensemble irréversible comportant une vis annulaire 5 entourant le premier écrou 3 tout en étant reliée rigidement à ce dernier, un deuxième moteur 6 destiné à entraîner en rotation la vis annulaire 5 et le premier écrou 3, un deuxième écrou 7 dont le filetage est en prise avec celui de la vis annulaire et qui est déplaçable axialement sur celle-ci lorsqu'elle est entraînée en rotation, et un piston 8 solidaire de l'extrémité du deuxième écrou 7 qui est tournée vers le frein.

Les premier et second ensembles sont montés sur un bâti commun 9 par rapport auquel le deuxième écrou 7 est immobilisé en rotation.

Le bâti 9 est en effet pourvu d'une gorge 10 s'étendant parallèlement à l'axe de la vis centrale 1 et dans laquelle un doigt 11 porté par le deuxième écrou est déplaçable longitudinalement lorsque la vis annulaire 5 est entraînée en rotation.

A son extrémité opposée au piston 8, la vis centrale 1 est pourvue d'une paroi circulaire 12 s'étendant perpendiculairement à son axe de rotation et portant une jupe périphérique cylindrique 13.

Cette jupe, qui est située du côté opposé au piston 8, est pourvue à son extrémité libre d'une couronne dentée extérieure 14 engrenant avec un pignon intermédiaire 15 engrenant lui-même avec un pignon 16 calé sur l'arbre de sortie du premier moteur 2.

C'est donc grâce à ce montage particulier que le premier moteur 2 peut entraîner la vis centrale 1 en rotation.

A son extrémité opposée au piston 8, la vis annulaire 5 est pourvue d'un prolongement cylindrique 17 entourant en grande partie la jupe 13 de la vis centrale 1 et portant à son extrémité libre une couronne dentée extérieure 18 engrenant avec un pignon intermédiaire 19 engrenant lui-même avec un pignon 20 calé sur l'arbre de sortie du deuxième moteur 6.

Cet autre montage permet bien entendu au deuxième moteur 6 d'entraîner la vis annulaire 5 en rotation.

On notera ici que les couronnes dentées 14 et 18 sont proches l'une de l'autre et que leurs dents sont relativement longues pour des raisons qui s'expliqueront d'elles-mêmes ci-après.

La vis centrale 1 se prolonge axialement à l'intérieur de la jupe 13 par un bout d'arbre 21 prenant appui sur un palier 22 pourvu sur sa face externe d'une collerette annulaire 23.

Cette collerette est appliquée contre l'extrémité supérieure d'un logement annulaire 24 ménagé dans le bâti 9, par des organes élastiques précomprimés 25, lesquels sont disposés dans le logement 24, entre la collerette 23 et l'extrémité inférieure de ce dernier.

Dans le mode de réalisation représenté, les organes élastiques sont des rondelles déformables du type Belleville ou autre.

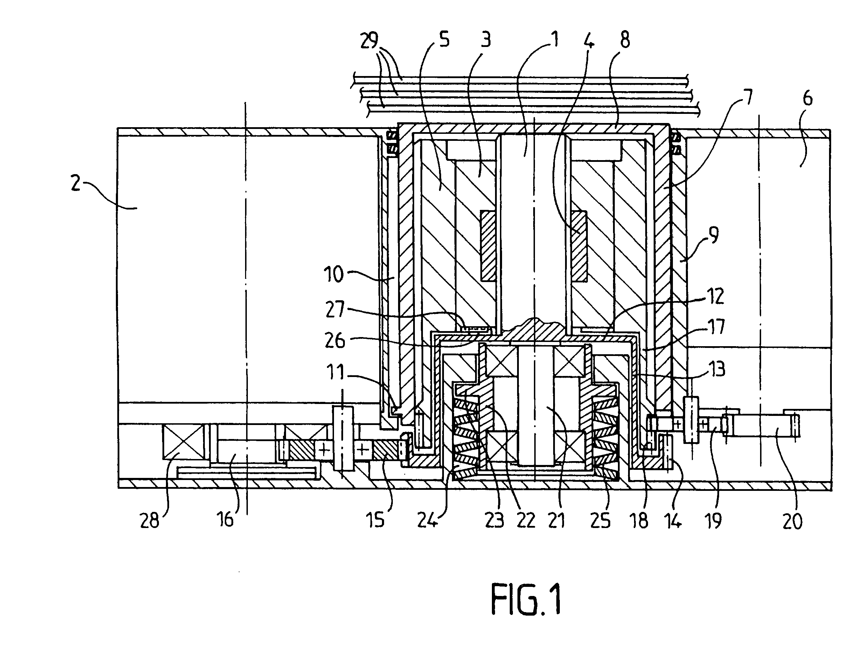

On notera par ailleurs que la paroi circulaire 12 de la vis centrale 1 porte sur sa face externe une protubérance 26 contre laquelle une protubérance 27 prévue sur l'extrémité adjacente du premier écrou 3 et destinée à prendre appui, lorsque celui-ci est vissé à fond, sur la vis centrale 1, comme représenté sur la figure 1.

Grâce à ces deux protubérances, qui viennent en contact sans s'accoupler lors du vissage à fond de l'écrou 3, le dévissage de ce dernier est réalisable sans la moindre difficulté, aucun blocage ne pouvant se produire entre la paroi circulaire 12 et l'écrou 3.

Pour être complet, on précisera qu'un capteur 28 est prévu pour déterminer la position angulaire de l'arbre de sortie du premier moteur 2 et connaître la distance que doit parcourir le piston 8 pour exécuter un freinage de service.

La connaissance de cette distance permet en effet de commander judicieusement le moteur 2 pour que le piston 8 puisse être rapproché systématiquement des disques 29 du frein de façon à rattraper le jeu dû à l'usure de ces derniers.

On va maintenant décrire le fonctionnement de l'actionneur électromécanique selon l'invention en se référant aux figures 1 à 7.

On notera tout d'abord que la figure 1 représente l'actionneur quand il ne serre pas les disques 29 du frein qui sont neufs.

Dans ce cas, le premier écrou 3 est vissé à fond sur la vis centrale 1, les organes élastiques 25 appliquent la collerette annulaire 23 du palier 22 contre l'extrémité supérieure du logement 24 ménagé dans le bâti 9 et le piston 8, qui est rétracté, est éloigné des disques 29.

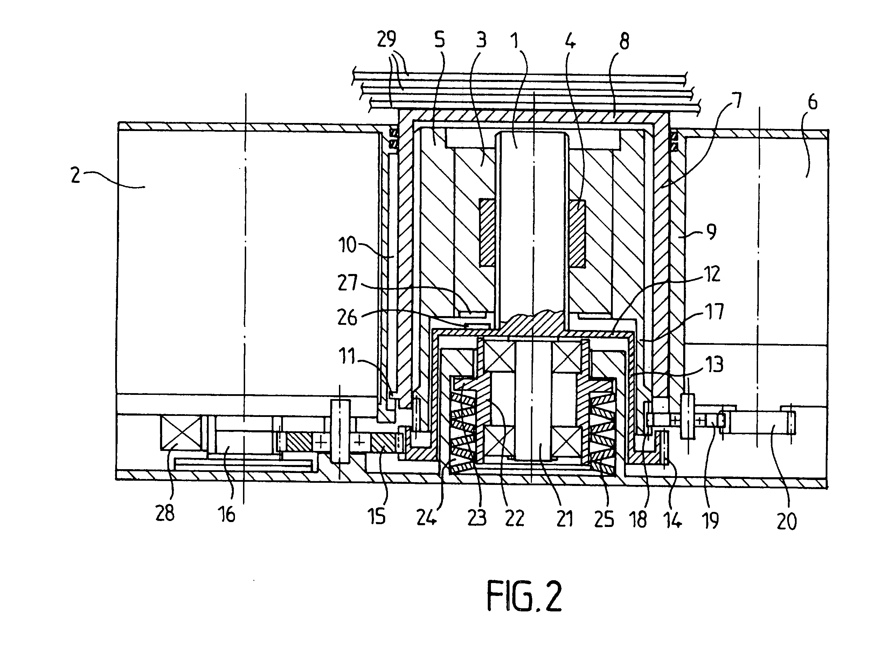

La figure 2 représente l'actionneur lors d'un freinage de service avec des disques neufs 29.

Pour assurer ce freinage, le premier moteur 2 a fait tourner la vis centrale 1 dans le sens pour lequel l'ensemble comprenant le premier écrou 3, la vis annulaire 5 et le deuxième écrou 7 s'est déplacé axialement sur la vis centrale 1 pour permettre au piston 8 de serrer fermement les disques 29 les uns contre les autres.

On notera qu'en raison de leur longueur relativement importante, les dents de la couronne dentée 18 restent en prise avec celles du pignon 19, malgré le déplacement de la vis annulaire 5 en direction des disques 29.

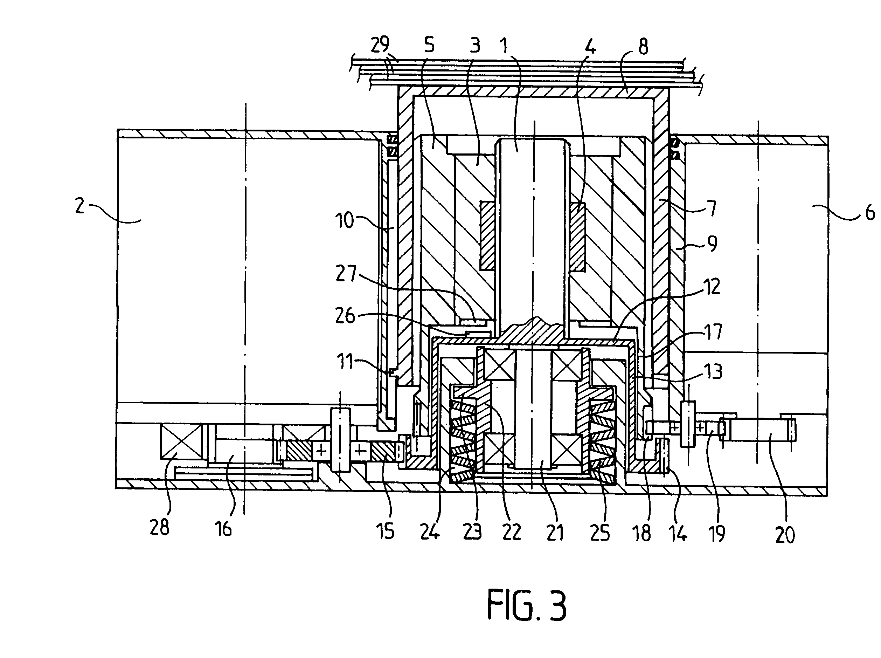

La figure 3 représente l'actionneur lors d'un freinage de service avec des disques usés 29.

Cette figure diffère de la figure 2 uniquement en ce que le deuxième écrou 7 et le piston 8 se sont déplacés sur la vis annulaire 5 pour venir contre les disques usés et assurer leur serrage.

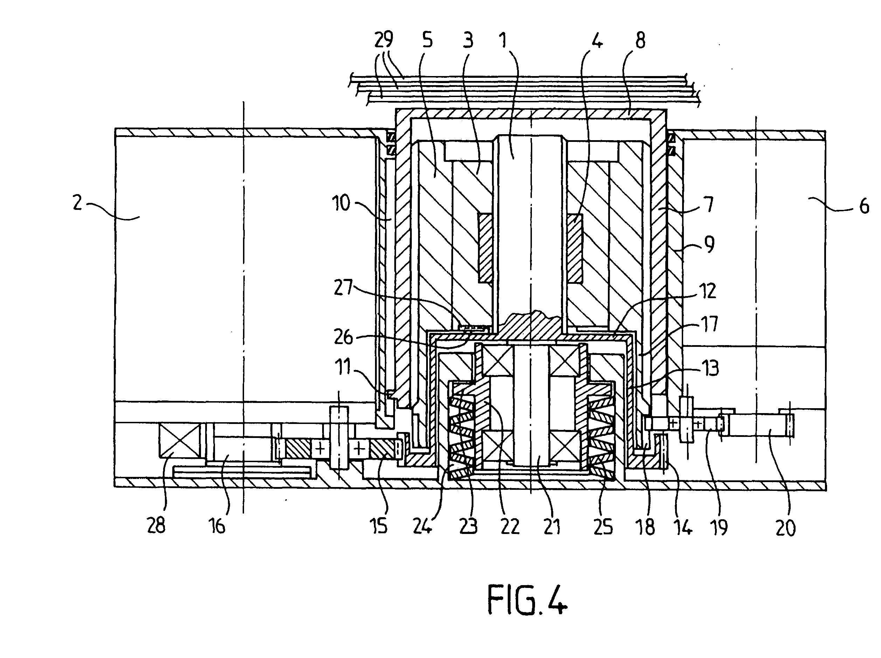

La figure 4 représente l'actionneur quand il ne serre pas les disques 29 du frein qui sont usés.

Dans ce cas, l'ensemble comprenant le premier écrou, la vis annulaire et le deuxième écrou est dans la position représentée sur la figure 1 tandis que le deuxième moteur 6 a fait tourner la vis annulaire 5 dans le sens pour lequel le second écrou s'est rapproché des disques usés 29, sans toutefois prendre appui contre le disque le plus proche.

Le piston 8 est dans la position dans laquelle le jeu dû à l'usure des disques a été rattrapé en fonction des indications du système de commande qui utilise les mesures du courant d'alimentation du premier moteur 2 et les mesures d'angle de rotation fournies par le capteur 28.

Plus précisément, lorsqu'il existe du jeu et que l'on actionne le frein de service, le piston 8 rapproche les disques sans qu'il y ait une augmentation du courant d'alimentation du premier moteur et les met ensuite en contact les uns avec les autres en faisant augmenter la demande en courant d'alimentation du premier moteur.

Ainsi, en mesurant ce courant d'alimentation et en prenant en compte les indications fournies par le capteur 28, on peut commander judicieusement le premier moteur pour qu'il rapproche le piston 8 des disques de façon à réduire automatiquement le jeu initial.

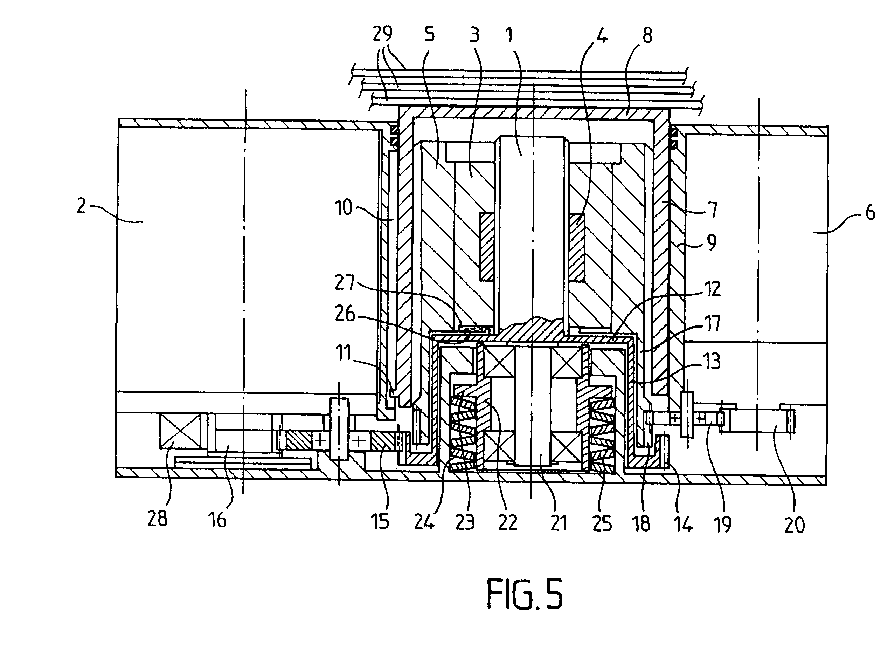

La figure 5 représente l'actionneur lors d'un freinage de parc avec des disques 29 neufs et très chauds (dont la température est par exemple de l'ordre de 300 à 400°C par suite d'un freinage de service).

Dans ce cas, le second moteur a fait tourner la vis annulaire 5 dans le sens pour lequel le second écrou 7 a appliqué le piston 8 contre les disques 29 après quoi l'ensemble comprenant la vis centrale, le premier écrou et la vis annulaire a reculé et comprimé davantage les organes élastiques 25.

Comme on peut le voir sur la figure 5, la collerette annulaire 23 du palier 22 s'est éloignée de l'extrémité supérieure du logement 24 ménagé dans le bâti 9.

Quant aux pignons 15 et 19, ils sont restés en prise avec les couronnes dentées 14 et 18 grâce à la longueur relativement importante des dents de ces dernières.

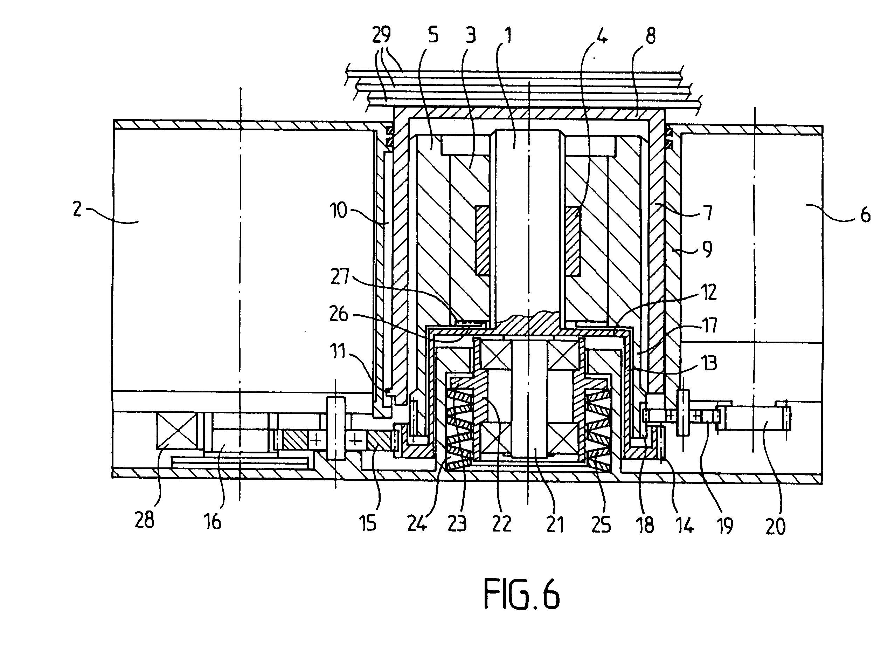

La figure 6 représente l'actionneur lors d'un freinage de parc avec des disques 29 qui sont neufs et dont la température a baissé fortement.

Dans ce cas, les disques se sont contractés en se refroidissant mais leur serrage a été maintenu sous l'action des organes élastiques 25 qui se sont légèrement détendus en poussant la collerette annulaire 23 du palier 22, ainsi que l'ensemble comprenant la vis centrale, le premier écrou et la vis annulaire, en direction des disques.

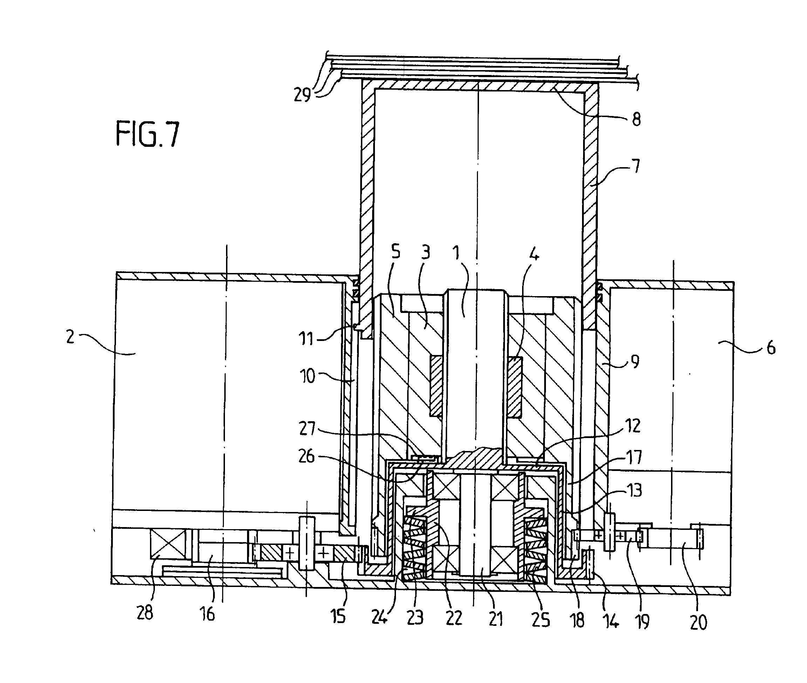

Enfin, la figure 7 représente l'actionneur lors d'un freinage de parc avec des disques 29 qui sont usés et dont la température n'a pas encore diminué après leur échauffement sous l'effet d'un freinage de service.

Cette figure diffère de la figure 5 uniquement en ce que le second écrou 7 s'est déplacé sur une plus grande distance en direction des disques 29 afin de tenir compte de leur usure.

On notera ici que le doigt 11 du second écrou 7 est situé au voisinage de l'extrémité supérieure de la gorge 10 du bâti 9 et que c'est grâce au doigt 11 que le second écrou n'a pu être entraîné en rotation pendant son déplacement en direction des disques.

On précisera encore que le piston 8 de l'actionneur conforme à l'invention peut se déplacer sur une distance d'environ 60 mm, sa course étant nettement supérieure à celle des pistons des actionneurs électromécaniques connus. L'actionneur selon l'invention est par conséquent plus performant que ces derniers.

## Revendications

1. Actionneur électromécanique de frein à disques multiples pour moyen de transport, notamment pour avion, comprenant, montés sur un bâti (9),
un premier ensemble réversible comprenant une vis centrale (1), un premier moteur électrique (2) destiné à entraîner la vis centrale en rotation, un premier écrou (3) déplaçable axialement sur la vis centrale lorsque celle-ci est entraînée en rotation, et des moyens (4) interposés entre la vis centrale et le premier écrou pour permettre un déplacement réversible de l'un au moins de ces deux organes, **caractérisé en ce qu'**il comprend
- un second ensemble irréversible comprenant une vis annulaire (5) solidaire extérieurement du premier écrou (3), un deuxième moteur électrique (6) destiné à entraîner en rotation la vis annulaire et le premier écrou, un deuxième écrou (7) immobilisé en rotation par rapport au bâti (9), mais déplaçable axialement sur la vis annulaire lorsque celle-ci est entraînée en rotation, la vis annulaire (5) et le deuxième écrou (7) étant en prise par l'intermédiaire de leurs filetages qui rendent leur déplacement irréversible, et un piston (8) prévu à l'une des extrémités du deuxième écrou (7) pour serrer les disques (29) les uns contre les autres afin d'assurer un freinage de service du moyen de transport lors de l'actionnement du premier moteur (2) et un freinage de parc lors de l'actionnement du second moteur (6).

2. Actionneur selon la revendication 1, **caractérisé en ce que** les moyens (4) prévus pour permettre un déplacement réversible de la vis centrale (1) et/ou du premier écrou (3) sont constitués par un mécanisme à rouleaux.

3. Actionneur selon la revendication 1, **caractérisé en ce que** les moyens (4) prévus pour permettre un déplacement réversible de la vis centrale (1) et/ou du premier écrou (3) sont constitués par un mécanisme à billes.

4. Actionneur selon l'une quelconque des revendications précédentes, **caractérisé en ce que** la vis centrale (1) comporte, du côté opposé au piston (8), une jupe cylindrique (13) pourvue extérieurement d'une couronne dentée (14) engrenant avec un pignon intermédiaire (15) engrenant lui-même avec un pignon (16) calé sur l'arbre de sortie du premier moteur (2).

5. Actionneur selon l'une quelconque des revendications précédentes, **caractérisé en ce que** la vis annulaire (5) comporte, du côté opposé au piston (8), un prolongement cylindrique (17) entourant au moins partiellement la jupe (13) de la vis centrale (1) et pourvu extérieurement d'une couronne dentée (18) engrenant avec un pignon intermédiaire (19) engrenant lui-même avec un pignon (20) calé sur l'arbre de sortie du deuxième moteur (6).

6. Actionneur selon l'une quelconque des revendications précédentes, **caractérisé en ce que** la vis centrale (1) est déplaçable axialement, à l'encontre de l'action d'organes élastiques précomprimés (25), dans la direction l'éloignant des disques multiples (29) lors du freinage de parc.

7. Actionneur selon la revendication 6, **caractérisé en ce que** les organes élastiques (25) sont disposés dans un logement annulaire (24) ménagé dans le bâti (9), coaxialement avec la vis centrale (1), et précomprimés entre l'extrémité du logement située à l'opposé des disques multiples (29) et une collerette annulaire (23) portée par un palier (22) sur lequel s'appuie un bout d'arbre (21) prolongeant axialement la vis centrale (1), la collerette (23) étant appliquée contre l'autre extrémité du logement (24) lors du freinage de service et non lors du freinage de parc.

8. Actionneur selon la revendication 6 ou 7, **caractérisé en ce que** les organes élastiques (25) sont des rondelles déformables.

9. Actionneur selon la revendication 7 ou 8, **caractérisé en ce que** le logement annulaire (24) du bâti (9) s'étend au moins en partie à l'intérieur de la jupe cylindrique (13) de la vis centrale (1).

10. Actionneur selon l'une quelconque des revendications 4 à 9, **caractérisé en ce que** la vis centrale (1) porte une paroi circulaire (12) s'étendant perpendiculairement à son axe de rotation, cette paroi portant elle-même la jupe cylindrique (13) à sa périphérie et étant pourvue sur sa face externe d'une protubérance (26) contre laquelle une protubérance (27) prévue sur le premier écrou (3) et ayant une forme correspondante est destinée à prendre appui lors du freinage de parc.

11. Actionneur selon l'une quelconque des revendications précédentes, **caractérisé en ce qu'**un capteur (28) est prévu pour déterminer la position angulaire de l'arbre de sortie du premier moteur (2) et connaître la distance que doit parcourir le piston (8) pour exécuter un freinage de service.

12. Frein à disques multiples pour moyen de transport, notamment pour avion, **caractérisé en ce qu'**il est commandé par plusieurs actionneurs électromécaniques selon l'une quelconque des revendications précédentes.

## Claims

1. An electromechanical multiple-disk brake actuator for a means of transport, in particular for an aircraft, comprising, mounted on a frame (9):
a first reversible assembly including a central screw (1), a first electric motor (2) for rotating the central screw, a first nut (3) axially displaceable over the central screw when the latter is rotated, and means (4) interposed between the central screw and the first nut to permit reversible displacement of at least one of these two members, **characterized in that** it comprises:
a second non-reversible assembly including an annular screw (5) externally integral with the first nut (3), a second electric motor (6) for rotating the annular screw and the first nut, a second nut (7) locked against rotation with respect to the frame (9), but axially displaceable over the annular screw when the latter is rotated, the annular screw (5) and the second nut (7) being in engagement via their threads, which make their displacement non-reversible, and a piston (8) provided at one end of the second nut (7) to press the disks (29) against one another in order to ensure service braking of the means of transport during actuation of the first motor (2) and parking braking during actuation of the second motor (6).

2. The actuator according to claim 1, **characterized in that** the means (4) provided for permitting reversible displacement of the central screw (1) and/or of the first nut (3) consist of a roller mechanism.

3. The actuator according to claim 1, **characterized in that** the means (4) provided for permitting reversible displacement of the central screw (1) and/or of the nut (3) consist of a ball mechanism.

4. The actuator according to any of the preceding claims, **characterized in that** the central screw (1) comprises, on the side opposite from the piston (8), a cylindrical skirt (13) provided externally with a ring gear (14) meshing with an intermediate gear (15), which itself meshes with a gear (16) keyed on the output shaft of the first motor (2).

5. The actuator according to any of the preceding claims, **characterized in that** the annular screw (5) comprises, on the side opposite from the piston (8), a cylindrical extension (17) at least partially surrounding the skirt (13) of the central screw (1) and provided externally with a ring gear (18) meshing with an intermediate gear (19), which itself meshes with a gear (20) keyed on the output shaft of the second motor (6).

6. The actuator according to any of the preceding claims, **characterized in that** the central screw (1) is axially displaceable, against the action of precompressed elastic members (25), in the direction away from the multiple disks (29) during parking braking.

7. The actuator according to claim 6, **characterized in that** the elastic members (25) are disposed in an annular housing (24) provided in the frame (9), coaxially with the central screw (1), and precompressed between the end of the housing located opposite from the multiple disks (29) and an annular collar (23) borne by a bearing (22), against which bears a stub shaft (21) axially prolonging the central screw (1), the collar (23) being applied against the other end of the housing (24) during service breaking and not during parking braking.

8. The actuator according to claim 6 or 7, **characterized in that** the elastic members (25) are deformable washers.

9. The actuator according to claim 7 or 8, **characterized in that** the annular housing (24) of the frame (9) extends at least in part inside the cylindrical skirt (13) of the central screw (1).

10. The actuator according to any of claims 4 to 9, **characterized in that** the central screw (1) bears a circular wall (12) extending perpendicularly to its axis of rotation, said wall itself bearing the cylindrical skirt (13) at its periphery and being provided on its outer face with a protuberance (26), against which a protuberance (27) provided on the first nut (3) and having a matching shape is designed to bear during parking breaking.

11. The actuator according to any of the preceding claims, **characterized in that** a sensor (28) is provided to determine the angular position of the output shaft of the first motor (2) and to indicate the distance that the piston (8) has to travel in order to perform a service braking operation.

12. A multiple-disk brake for a means of transport, in particular for an aircraft, **characterized in that** it is actuated by a plurality of electromechanical actuators according to any of the preceding claims.

## Patentansprüche

1. Elektromechanisches Mehrscheibenbremsen-Stellglied für Transporteinrichtung, im Besonderen für ein Flugzeug, Folgendes an einem Rahmen (9) angebracht umfassend:
eine erste umkehrbare Einheit, die eine mittige Schraube (1), einen ersten Elektromotor (2), der die mittige Schraube in Drehung versetzen soll, eine erste Mutter (3), die an der mittigen Schraube, wenn diese in Drehung versetzt wird, axial verschoben werden kann, und Einrichtungen (4), die zwischen der mittigen Schraube und der ersten Mutter eingefügt sind, um eine umkehrbare Verschiebung wenigstens einer dieser zwei Vorrichtungen zu ermöglichen, **dadurch gekennzeichnet, dass** sie umfasst:
eine zweite unumkehrbare Einheit, die eine ringförmige Schraube (5), die außen fest mit der ersten Mutter (3) verbunden ist, einen zweiten Elektromotor (6), der die ringförmige Schraube und die erste Mutter in Drehung versetzen soll, eine zweite Mutter (7), die in Bezug auf den Rahmen (9) in der Drehung blockiert ist, aber an der ringförmigen Schraube, wenn diese in Drehung versetzt wird, axial verschoben werden kann, wobei sich die ringförmige Schraube (5) und die zweite Mutter (7) mittels ihrer Gewinde, die ihre Verschiebung unumkehrbar machen, in Eingriff befinden, und einen Kolben (8), der an einem der Enden der zweiten Mutter (7) vorgesehen ist, um die Scheiben (29) gegeneinander zu pressen, um bei Betätigung des ersten Motors (2) ein Betriebsbremsen der Transporteinrichtung und bei Betätigung des zweiten Motors (6) ein Feststellbremsen sicherzustellen.

2. Stellglied nach Anspruch 1, **dadurch gekennzeichnet, dass** die Einrichtungen (4), die zum Ermöglichen eines umkehrbaren Verschiebens der mittigen Schraube (1) und/oder der ersten Mutter (3) vorgesehen sind, durch einen Rollenmechanismus gebildet werden.

3. Stellglied nach Anspruch 1, **dadurch gekennzeichnet, dass** die Einrichtungen (4), die zum Ermöglichen eines umkehrbaren Verschiebens der mittigen Schraube (1) und/oder der ersten Mutter (3) vorgesehen sind, durch einen Kugelmechanismus gebildet werden.

4. Stellglied nach einem der vorhergehenden Ansprüche, **dadurch gekennzeichnet, dass** die mittige Schraube (1) auf der dem Kolben (8) gegenüberliegenden Seite einen zylindrischen Mantel (13) umfasst, der außen mit einem Zahnkranz (14) versehen ist, der mit einem Zwischenzahnrad (15) in Eingriff kommt, das selbst mit einem an der Abtriebswelle des ersten Motors (2) festsitzenden Zahnrad (16) in Eingriff kommt.

5. Stellglied nach einem der vorhergehenden Ansprüche, **dadurch gekennzeichnet, dass** die ringförmige Schraube (5) auf der dem Kolben (8) gegenüberliegenden Seite eine zylindrische Verlängerung (17) umfasst, die wenigstens teilweise den Mantel (13) der mittigen Schraube (1) umgibt und außen mit einem Zahnkranz (18) versehen ist, der mit einem Zwischenzahnrad (19) in Eingriff kommt, das selbst mit einem an der Abtriebswelle des zweiten Motors (6) festsitzenden Zahnrad (20) in Eingriff kommt.

6. Stellglied nach einem der vorhergehenden Ansprüche, **dadurch gekennzeichnet, dass** beim Feststellbremsen die mittige Schraube (1) entgegen der Wirkung vorkomprimierter elastischer Vorrichtungen (25) in die Richtung, die sie von den Mehrscheiben (29) entfernt, axial verschiebbar ist.

7. Stellglied nach Anspruch 6, **dadurch gekennzeichnet, dass** die elastischen Vorrichtungen (25) in einer ringförmigen Aufnahme (24), die in dem Rahmen (9) eingerichtet ist, koaxial zu der mittigen Schraube (1) angeordnet sind und zwischen dem gegenüber den Mehrscheiben (29) befindlichen Ende der Aufnahme und einem ringförmigen Flansch (23), der von einem Lager (22) getragen wird, an dem ein die mittige Schraube (1) axial verlängerndes Wellenende anliegt, vorkomprimiert werden, wobei der Flansch (23) beim Betriebsbremsen und nicht beim Feststellbremsen gegen das andere Ende der Aufnahme (24) gedrückt wird.

8. Stellglied nach Anspruch 6 oder 7, **dadurch gekennzeichnet, dass** die elastischen Vorrichtungen (25) verformbare Teller sind.

9. Stellglied nach Anspruch 7 oder 8, **dadurch gekennzeichnet, dass** sich die ringförmige Aufnahme (24) des Rahmens (9) wenigstens teilweise in das Innere des zylindrischen Mantels (13) der mittigen Schraube (1) erstreckt.

10. Stellglied nach einem der Ansprüche 4 bis 9, **dadurch gekennzeichnet, dass** die mittige Schraube (1) eine kreisförmige Wand (12) trägt, die sich senkrecht zu ihrer Drehachse erstreckt, wobei diese Wand selbst den zylindrischen Mantel (13) an ihrem Umfang trägt und an ihrer Außenseite mit einem Vorsprung (26) versehen ist, gegen den ein Vorsprung (27), der an der ersten Mutter (3) vorgesehen ist und eine entsprechende Form aufweist, beim Feststellbremsen zur Anlage kommen soll.

11. Stellglied nach einem der vorhergehenden Ansprüche, **dadurch gekennzeichnet, dass** ein Sensor (28) vorgesehen ist, um die Winkelposition der Abtriebswelle des ersten Motors (2) zu bestimmen und die Distanz zu kennen, die der Kolben (8) zum Durchführen eines Betriebsbremsens zurücklegen muss.

12. Mehrscheibenbremse für Transporteinrichtung, im Besonderen für ein Flugzeug, **dadurch gekennzeichnet, dass** sie durch mehrere elektromechanische Stellglieder nach einem der vorhergehenden Ansprüche gesteuert wird.
